# EUROPÄISCHE PATENTSCHRIFT

(11) **EP 1 282 832 B1**
(45) Veröffentlichungstag und Bekanntmachung des Hinweises auf die Patenterteilung: **05.11.2008**
(21) Anmeldenummer: 01955283.5
(22) Anmeldetag: 16.05.2001
(51) Int. Cl.: G01S 13/86, G01S 13/44, G01S 7/03, G01S 13/42, F41G 3/06, F41G 5/08

(54) **RADAREINRICHTUNG FÜR DEN OBJEKT-SELBSTSCHUTZ**
RADAR DEVICE FOR OBJECT SELF-PROTECTION
DISPOSITIF RADAR POUR L'AUTOPROTECTION D'OBJETS

(30) Priorität: 17.05.2000 DE 10024320
(43) Veröffentlichungstag der Anmeldung: 12.02.2003
(73) Patentinhaber: Diehl BGT Defence GmbH & Co.KG, 88662 Überlingen (DE)
(72) Erfinder: PAPPERT, Gunnar, 90518 Altdorf (DE); SCHLÜTER, Klaus, 90542 Eckental (DE)
(74) Vertreter: Diehl Patentabteilung
(86) Internationale Anmeldenummer: PCT/EP2001/005589
(87) Internationale Veröffentlichungsnummer: WO 2001/088564

(56) Entgegenhaltungen:
- EP-A- 0 090 400
- EP-A- 0 898 324
- EP-A- 1 096 218
- DE-A- 2 822 845
- DE-A- 4 426 014
- US-A- 5 343 211

## Beschreibung

Die Erfindung betrifft eine Radareinrichtung gemäß dem Oberbegriff des Anspruches 1.

Eine derartige Radareinrichtung ist aus der DE 28 22 845 C2 als Gruppenantenne mit elektronisch gesteuerter Strahlschwenkung zur Rundumabtastung bekannt, um einen anfliegenden Angreifer wenigstens hinsichtlich der Angriffsrichtung, möglichst aber auch hinsichtlich der momentanen Angriffsgeschwindigkeit und -entfemung, erfassen und Abwehreinrichtungen entsprechend nachrichten zu können. Bevorzugt wird dort die Anordnung von Einzelstrahlern in einem Kugelvolumen gegenüber einer Anordnung in Form von planaren Gruppenantennen, die als ungeeignet verworfen werden, weil ihre Strahlbündelungscharakteristiken wegen variierender Projektion auf die Gruppenanordnung von der momentanen Schwenkrichtung abhängen und bei den üblichen Anordnungen außerdem in horizontaler Richtung eine deutlich weniger scharfe Bündelung als in vertikaler Richtung aufweisen. Aber auch bei der kugelschalenförmigen Staffelung von Einzelstrahlern bleiben die Probleme mechanisch schwingungsstabiler Anordnung des hoch aufgeständerten Kugelgebildes auf dem sich im rauhen Gelände bewegenden Objekt und funktionskritischer Schnittstellen zwischen dem Objekt, das solch eine Radareinrichtung trägt, und der hochdynamisch auf den anfliegenden Angreifer nachzurichtenden Abwehranlage für den Selbstschutz des Objektes. Ein besonderer Engpaß ist die hinreichend rasche Echoauswertung der sehr großen Anzahl von Einzelstrahlem unter Berücksichtigung ihrer aktuellen geometrischen Konfiguration in bezug auf den sich sehr schnell und dicht annähernden Angreifer.

Der Erfindung liegt deshalb die Aufgabe zugrunde, eine Radareinrichtung gattungsgemäßer Art zu schaffen, die mit einfacher, bewährter Technologie insbesondere für das schnelle Ausrichten und Nachführen eines Abschußbehälters mit Splittergranaten gegen den Anflug eines ferngelenkten oder selbst lenkenden Flugkörpers auf kurze Restdistanz geeignet ist, wie es als Selbstschutzsystem in der US 5,661,254 A oder in DE 199 51915 vom 28.10.99 näher beschrieben ist.

Gemäß der im Hauptanspruch umrissenen Erfindung wird für die Lösung dieser Aufgabe auf die in der gattungsbildenden Vorveröffentlichung gerade für solche Aufgabenstellungen ausdrücklich verworfene Planarantenne zurückgegriffen. Die wird nun als frequenzscannendes Überwachungsradar direkt am objektfesten Unterbau des Richtantriebs für den Abschußbehälter angeordnet und modular so dimensioniert, daß ihre um etwa ± 90° immateriell verschwenkbare Richtcharakteristik praktisch den halben Azimut voraus mit mäßiger Azimutpeilschärfe aber hoher Elevationspeilschärfe dopplerempfindlich abtastet. Das erbringt eine zwar zunächst nur grobe aber schnelle Information über die momentanen Annäherungskoordinaten eines Angreifers und seine Bewegungsdaten, um den Abschußbehälter mit seinen Abwehr-Splittergranaten in diese Richtung zu orientieren. Nun wird im dezidierten Raumsegment ein zusätzliches, hochauflösendes Zielverfolgungsradar zur präzisen Zielauffassung und -verfolgung wirksam, um die Wirkrichtung des Abschußbehälters auf das Ziel auszurichten und danach die Granate in optimaler Annäherungssituation zu starten. Dafür ist das Zielverfolgungsradar, etwa als Monopuls-System ausgelegt, achsparallel unmittelbar in den Abschußbehälter integriert. Dadurch erübrigt sich das rechnerisch anspruchsvolle und zeitlich kritische Umsetzen und Übergeben der Zielrichtungskoordinaten vom Tracking-System an die Richtungssteuerung des Abschußbehälters. Vielmehr wird der Angreifer nach der groben Einweisung vom Überwachungsradar her unmittelbar in der Wirkrichtung der Abwehrgranate als das Ziel aufgefaßt, das dann mit dem Abschußbehälter im Feintracking zu verfolgen ist. Das Werfersystem müßte ohnehin auf das Ziel ausgerichtet werden. Es erbringt deshalb Zeitersparnis und vereinfachte Steuerungsvorgaben, erfindungsgemäß die Zielauffassung des Werfers und des Verfolgungsradars apparativ zusammenzulegen. Das bedeutet, daß das Stellglied für die Richtantriebe des Abschußbehälters ohne erst Koordinatensysteme transformieren zu müssen direkt zunächst vom Überwachungsradar und danach vom Zielverfolgungsradar beaufschlagt wird. So wird zwangsläufig eine ideale Kinematik erzielt, weil die Wirkrichtung des Abschußbehälters direkt der Zielbewegung relativ zum zu schützenden Objekt folgt, um bei Erreichen eines wirkoptimierten Abstandes für die Funktion der Abwehr-Splittergranate diese auf das längst aufgefaßte Ziel abzufeuern.

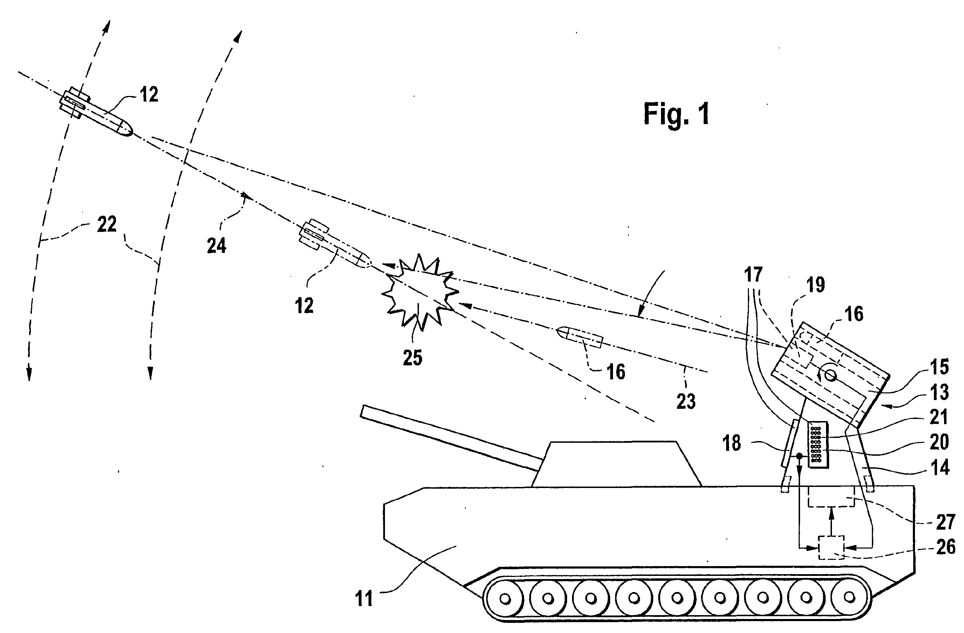

Hinsichtlich zusätzlicher Vorteile, Alternativen und Weiterbildungen der Erfindung wird außer auf die weiteren Ansprüche auf nachstehender Beschreibung eines in der Zeichnung unter Beschränkung auf das Wesentliche stark abstrahiert und nicht maßstabsgerecht skizzierten bevorzugten Realisierungsbeispiels zur erfindungsgemäßen Lösung verwiesen. Die einzige Figur der Zeichnung zeigt als schematisches Szenario die Abwehr eines angreifenden Flugkörpers in schon gefährlich dichter Annäherung - also kurz vor dem Treffer - von einem Objekt in Form eines zu schützenden Panzerfahrzeugs aus.

Das stationäre oder wie hier mobile bedrohte Objekt 11 ist zu seinem Selbstschutz gegen die Bedrohung durch einen angreifenden Flugkörper 12 mit einem Werfer 13 ausgestattet, der zum Erfassen der halben Hemisphäre voraus auf einem objektfesten Unterbau 14 mit einem im Azimut schwenkbaren und in der Höhe richtbaren Abschußbehälter 15 für schnelle Splittergranaten 16 ausgestattet ist. Die sollen dem angreifenden und schon dicht angenäherten Flugkörper 12 noch entgegen geschossen werden, um dessen Annäherungsflugbahn in der Endphase zu stören und damit zugleich dessen Sensorik oder dessen Struktur möglichst zu zerstören, so daß er nicht mehr mit originärer Wirkung sondern allenfalls noch mit nichtletaler Restwirkung auf das avisierte Objekt 11 einwirken kann.

Für diesen Abfangvorgang auf kurze Restdistanz ist die Lafette 13 mit einer Radareinrichtung 17 ausgestattet, die auf den objektfesten Unterbau 14 und auf den richtbaren Abschußbehälter 15 in der Weise verteilt ist, daß ein relativ niedrig auflösendes Überwachungsradar 18 am objektfesten Unterbau 14 und ein dagegen sehr präzises Zielverfolgungsradar 19 am verschwenkbaren Abschußbehälter 15 angeordnet ist. Das Überwachungsradar 18 dient der Beobachtung der Umgebung in der potentiellen Gefährdungsrichtung und ist dafür mit einer modularen Planarantenne ausgestattet, deren Einzelstrahler 21 pro Modul jeweils zeilen- und spaltenförmig zu einem im Wesentlichen vertikal sich erstreckenden Array gruppiert sind. Ein Modul ist voraus orientiert, zwei weitere sind etwas schräg dagegen versetzt seitlich voraus orientiert, wie in der Zeichnungsskizze angedeutet. Damit erfolgt in als solcher bekannter Weise im Wege elektronischer Strahlformung und Strahlschwenkung eine im wesentlichen horizontale Abtastbewegung 22 mit guter vertikaler und mäßiger horizontaler Bündelung, um in breitem Erfassungsbereich möglichst rasch eine möglichst genaue Elevationsinformation über einen etwa angreifenden Flugkörper 12 zu gewinnen.

Wenn dabei in einem der zyklisch erfaßten Raumsegmente ein sich annähernder Flugkörper 12 detektiert und verifiziert ist, wird das Monopuls-Zielverfolgungsradar 19 auf dieses Raumsegment aufgeschaltet, indem sogleich unmittelbar die Richtachse des Abschußbehälters dorthin orientiert wird, um mit der stark gebündelten Charakteristik etwa eines achsparallelen Parabol-, Cassegrain- oder Planarstrahlers jenen Flugkörper 12 in der grob vorgegeben Richtung dann genau aufzufassen. Der Werfer 13H hält also fortan auf sein Ziel. Das bedeutet, daß die Wirkachse 23 des Abschußbehälters 15, längs derer die Splittergranate 16 auf den dann hinreichend dicht angenäherten Flugkörper 12 abgefeuert werden wird, sofort und unmittelbar auf dieses Ziel einschwenkt und die Wirkachse 23 des Abschußbehälters 15 dann zwangsläufig mit dem Verfolgungsradar 19 immer diesem Ziel 12 nachgeführt wird, ohne daß es dafür fortan noch weiterer Umsetzung und Übergabe von Richtdaten zwischen einer objektfesten Radareinrichtung und dessem Abwehrsystem bedarf.

Die Annäherungsbewegung 24 des abzuwehrenden Flugkörpers 12 wird so bis zum Abschuß der Splittergranate 16 kurz vor dem Bahn-Kollisionspunkt 25 vom Zielverfolgungsradar 19 getrackt, bis es sich so dicht an das zu schützende Objekt 11 angenähert hat, um die Abwehrgranate 16 mit hinreichenden Erfolgsaussichten auf den angreifenden Flugkörper 12 abschießen zu können.

Bei der Radarführung eines Abschußbehälters 15 für Splittergranaten 16 zur Abwehr eines anfliegenden Flugkörpers 12 vom zu schützenden Objekt 11 aus ergibt sich demzufolge mit vorliegender Erfindung eine aus vorhandenen Komponenten preisgünstig erstellbare und mangels Schnittstellen zwischen Objekt 11 und Abschußbehälter 15 in der besonders funktionskritischen Endphase störungsfrei arbeitende Radarführung, wenn für die Raumüberwachung und Zielauffassung am objektfesten Unterbau 14 des Abschußbehälters 15 eine Planarantenne 20 zur schnellen Erstdetektion vorgesehen wird, die ihre grobe Zielinformation an ein in den Abschußbehälter 15 integriertes Zielverfolgungsradar 19 zum unmittelbaren Einweisen und Nachführen des Abschußbehälters 15 auf die Annäherung des abzuwehrenden Flugkörpers 12 übergibt. Dafür sind die beiden nacheinander wirksamen Funktionsteile der Radareinrichtung 17 auf den Stellgeber 26 für die Antriebe 27 zum Einrichten und Nachführen des Abschußbehälters 15 geschaltet.

## Patentansprüche

1. Radareinrichtung (17) mit Planarantenne (20) aus gruppierten Einzelstrahlem (21) für den Objekt-Selbstschutz gegen Bedrohung durch einen angreifenden Flugkörper (12),
**dadurch gekennzeichnet, daß** die Radar einrichtung in ein Überwachungsradar und ein Zielverfolgungsradar aufgeteilt ist,
wobei die Einzelstrahler (21) in wenigstens einer vertikal orientierten Gruppe mit verschwenkbarer Richtcharakteristik als Überwachungsradar (18) am objektfesten Unterbau (14) eines richtbaren Abschußbehälters (15) für Splittergranaten (16) zeilen- und spaltenförmig angeordnet sind, wobei in den Abschußbehälter das vom Überwachungsradar (18) eingewiesene Zielverfolgungsradar (19) für die Annäherungsbewegung (24) des abzuwehrenden Flugkörpers (12) achsparallel zur Richtachse des Abschußbehälters integriert ist.

2. Radareinrichtung nach Anspruch 1,
**dadurch gekennzeichnet,**
**daß** die Einzelstrahler (21) der Planarantenne (20) in gegeneinander verschwenkt ausgerichteten Modulen zum Erfassen etwa der Halbhemisphäre um das zu schützende Objekt (11) voraus gruppiert sind.

3. Radareinrichtung nach einem der vorangehenden Ansprüche,
**dadurch gekennzeichnet,**
**daß** das Zielverfolgungsradar (19) ein vom Überwachungsradar (18) eingewiesenes Monopulsradar ist.

4. Radareinrichtung nach dem vorangehenden Anspruch,
**dadurch gekennzeichnet,**
**daß** das Überwachungsradar (18) und das Zielverfolgungsradar (19) beide auf einen Stellgeber (26) für die Antriebe (27) zur räumlichen Ausrichtung und dann zur Zielverfolgung des Abschußbehälters (15) geschaltet sind.

## Claims

1. Radar device (17) having a planar antenna (20) composed of individual antenna elements (21) in the form of an array for object self-protection against a threat from an attacking missile (12),
**characterized**
**in that** the radar device is subdivided into a surveillance radar and a target tracking radar with the individual antenna elements (21) in at least one vertically oriented group with a directional characteristic which can be scanned being arranged in the form of rows and columns as a surveillance radar (18) on the substructure (14), which is fixed to the object, of a launch container (15), which can be aimed, for fragmentation shells (16), with the target tracking radar (19), which is aligned by the surveillance radar (18) being integrated in the launch container parallel to the aiming axis thereof, for the approach movement (24) of the missile (12) to be defended against.

2. Radar device according to Claim 1,
**characterized**
**in that** the individual antenna elements (21) of the planar antenna (20) are grouped in advance into modules, which are aligned such that they are scanned with respect to one another, for coverage of approximately the half-hemisphere around the object (11) to be protected.

3. Radar device according to one of the preceding claims,
**characterized**
**in that** the target tracking radar (19) is a monopulse radar which is aligned by the surveillance radar (18).

4. Radar device according to the preceding claim,
**characterized**
**in that** the surveillance radar (18) and the target tracking radar (19) are both connected to a position transmitter (26) for the drives (27) for three-dimensional alignment and then for target tracking of the launch container (15).

## Revendications

1. Dispositif radar (17) muni d'une antenne plane (20) constituée d'antennes rayonnantes individuelles (21) groupées pour l'autoprotection de l'objet contre les menaces par un missile (12) assaillant, **caractérisé en ce que** le dispositif radar est divisé en un radar de surveillance et un radar de poursuite de cible, les antennes rayonnantes individuelles (21) étant disposées sous la forme de lignes et de colonnes en au moins un groupe orienté verticalement ayant une caractéristique directionnelle pivotante et faisant office de radar de surveillance (18) sur la base fixe d'objet (14) d'un caisson de lancement (15) orientable pour des grenades à fragmentation (16), le radar de poursuite de cible (19) dirigé par le radar de surveillance (18) étant intégré dans le caisson de lancement parallèlement à l'axe d'orientation du caisson de lancement pour le mouvement d'approche (24) du missile (12) contre lequel il faut assurer la défense.

2. Dispositif radar selon la revendication 1, **caractérisé en ce que** les antennes rayonnantes individuelles (21) de l'antenne plane (20) sont groupées à l'avance en modules pivotés les uns par rapport aux autres pour détecter approximativement le demi-hémisphère autour de l'objet à protéger (11).

3. Dispositif radar selon l'une des revendications précédentes, **caractérisé en ce que** le radar de poursuite de cible (19) est un radar à impulsion unique dirigé par le radar de surveillance (18).

4. Dispositif radar selon l'une des revendications précédentes, **caractérisé en ce que** le radar de surveillance (18) et le radar de poursuite de cible (19) sont tous deux connectés à un codeur de position (26) des mécanismes d'entraînement (27) pour l'orientation dans l'espace et ensuite pour la poursuite de la cible par le caisson de lancement (15).
